# FASCICULE DE BREVET EUROPEEN

(11) **EP 1 289 826 B1**
(45) Date de publication et mention de la délivrance du brevet: **25.08.2004**
(21) Numéro de dépôt: 01940690.9
(22) Date de dépôt: 05.06.2001
(51) Int. Cl.: B62K 19/46, B62J 9/00

(54) **COFFRE POUR VEHICULE DEUX ROUES A MOTEUR**
KOFFERRAUM FÜR ZWEIRADKRAFTFAHRZEUGE
POWER-DRIVEN TWO-WHEELER DEVICE WITH LOAD TRUNK FOR INCREASING LOAD CAPACITY AND SAFE LOAD TRANSPORT

(30) Priorité: 02.06.2000 FR 0007111
(43) Date de publication de la demande: 12.03.2003
(73) Titulaire: Touvron, Joel, 13260 Cassis (FR); Foucher, Francois, F-13122 Ventabren (FR); Fevrier, Jean, F-13420 Gemenos (FR)
(72) Inventeur: Touvron, Joel, 13260 Cassis (FR); Foucher, Francois, F-13122 Ventabren (FR); Fevrier, Jean, F-13420 Gemenos (FR)
(74) Mandataire: Bentz, Jean-Paul
(86) Numéro de dépôt international: PCT/FR2001/001732
(87) Numéro de publication internationale: WO 2001/092090

(56) Documents cités:
- EP-A- 0 255 254
- EP-A- 0 463 942
- DE-A- 4 201 207
- GB-A- 2 088 800
- JP-A- 63 263 183
- US-A- 4 964 484
- PATENT ABSTRACTS OF JAPAN vol. 017, no. 439 (M-1462), 13 août 1993 (1993-08-13) & JP 05 097080 A (SUZUKI MOTOR CORP), 20 avril 1993 (1993-04-20)

## Description

### ARRIERE-PLAN DE L'INVENTION

### 1. Domaine Technique

La présente invention concerne le domaine des dispositifs de véhicules deux roues à moteurs, tels que les motocycles, motocyclettes, cyclomoteurs, scooters et dérivés et porte plus particulièrement sur un coffre de chargement destiné à équiper un tel véhicule à deux roues.

### 2. Etat de la Technique Antérieure

Actuellement pour transporter des charges sur un motocycle, on dispose de sacoches souples ou de valises rigides qui se fixent en position latérale de chaque côté du porte-bagages arrière d'un motocycle.

L'inconvénient de ces équipements latéraux est d'avoir une capacité réduite, de l'ordre de quelques dizaines de litres, par exemple typiquement 25 litres pour une sacoche.

Autre inconvénient, ces équipements latéraux présentent un certain encombrement latéral qui gêne le véhicule à deux roues dans ses déplacements.

De façon connue, on dispose également de boîtiers ou de caisses (en anglais, "top-case") qui se fixent sur le porte-bagages et peuvent contenir un volume plus important de l'ordre de plusieurs dizaines de litres, par exemple typiquement 40 litres.

Un tel boîtier est connu du document JP-A-05 097 080.

L'inconvénient de tous ces systèmes de chargement est d'offrir une capacité encore trop limitée.

D'un point de vue mécanique, ces systèmes de chargement posent un double problème d'instabilité.

D'une part, la disposition de la charge en position élevée au niveau du porte-bagages, augmente la hauteur du centre de gravité du véhicule. Lors des manoeuvres du véhicule à faible vitesse ou à l'arrêt, comme par exemple la mise sur béquille, le surhaussement de la charge engendre un important moment latéral, résultant du poids de la charge qui s'exerce à distance du point de contact de la roue arrière, ce qui tend à déséquilibrer le véhicule.

D'autre part, le positionnement à l'arrière de la charge expose, lors des accélérations, à un effet de renversement sur la roue arrière.

Surtout, le déplacement vers l'arrière du centre de gravité du véhicule diminue l'appui sur la roue avant, ce qui fait perdre de l'efficacité au freinage, la roue avant étant celle qui supporte la majorité de l'effort de freinage sur un véhicule deux roues.

Sur les scooters, il existe aussi des coffres de rangement disposés sous la selle ou sur la plate-forme devant la selle, qui permettent de stocker un casque de motocycliste, soit un volume d'une dizaine de litres.

L'inconvénient de ces systèmes de chargement reste leur faible capacité et l'instabilité mécanique qu'ils génèrent.

L'objet de l'invention est d'équiper un véhicule deux roues à moteur d'un système de transport de charge permettant d'augmenter, voire de multiplier, la capacité de chargement d'un véhicule à deux roues à moteur.

Dans cet objectif, le problème de la stabilité mécanique devient primordial, puisque le volume et/ou le poids de la charge peuvent alors atteindre et dépasser ceux du conducteur et devenir prépondérants dans le comportement mécanique de l'engin.

Un autre objectif de l'invention est donc de fournir un système de transport de charge pour véhicule deux roues à moteur permettant de sécuriser mécaniquement le transport de chargement volumineux ou pesant, tant sur le plan statique que sur le plan dynamique.

Un autre objet de l'invention est de prévoir un nouveau dispositif de véhicule deux roues affecté au transport de chargement de forte capacité, présentant une bonne sécurité mécanique.

### EXPOSE SOMMAIRE DE L'INVENTION

Succinctement, ces objectifs sont atteints selon l'invention en prévoyant un dispositif de véhicule deux roues à moteur équipé d'un coffre de chargement de forme proéminente occupant tout l'espace situé entre la roue avant et la roue arrière, ce qui permet de centrer la charge embarquée et d'abaisser son centre de gravité.

De façon avantageuse, le positionnement du centre de gravité du chargement auprès de l'axe longitudinal et auprès du milieu entre la roue avant et la roue arrière permet de diminuer le moment de renversement latéral du poids et d'augmenter relativement le moment du poids aussi bien par rapport à l'axe de la roue arrière que par rapport à l'axe de la roue avant, ce qui s'oppose à tout cabrage sur l'arrière ou sur l'avant.

De même l'abaissement du centre de gravité du coffre de chargement permet avantageusement de stabiliser le comportement dynamique. En utilisation, le conducteur est juché sur la partie arrière du coffre en chevauchant celui-ci, la forme proéminente du coffre étant aménagée pour former deux logements latéraux pour les jambes du conducteur, le support de la selle étant constitué avantageusement par un capot amovible obturant l'ouverture du coffre.

L'invention peut être mise en oeuvre sous forme d'un coffre de chargement modulaire à monter sur le châssis d'un véhicule deux roues, par exemple sur la plate-forme d'un scooter ou sous forme d'un dispositif de véhicule deux roues à moteur équipé à demeure d'un tel coffre.

Ainsi, l'invention est réalisée avec un coffre de chargement destiné à équiper un véhicule deux roues à moteur, pour augmenter la capacité de chargement, tout en sécurisant le transport du chargement sur le véhicule, caractérisé en ce qu'il est formé d'un container présentant une forme proéminente et se positionnant entre la roue avant et la roue arrière du véhicule, le container enveloppant un volume de chargement de l'ordre d'une à plusieurs centaines de litres et comportant des moyens de fixation sur le châssis du véhicule entre la roue avant et la roue arrière, de sorte que le volume de chargement présente un barycentre disposé en position médiane entre les deux roues et en position surbaissée par rapport à la hauteur de l'axe de la roue arrière, le coffre étant équipé d'une ouverture de chargement et d'un capot d'ouverture monté de façon amovible sur le dessus du coffre, l'emplacement et la taille des proéminences du coffre étant choisis de façon à aménager deux logements latéraux pour les jambes du conducteur afin de constituer une protection en cas de choc latéral.

Selon le mode de réalisation préféré, le capot d'ouverture forme un support de selle pour le conducteur.

De préférence, le capot d'ouverture est articulé sur un axe de rotation monté à la partie supérieure du coffre de façon à permettre d'ouvrir le capot par rotation vers le guidon du véhicule.

Selon le mode de réalisation préféré, le container présente deux joues proéminentes sensiblement symétriques par rapport à un plan axial, l'emplacement et la taille des joues proéminentes étant choisis pour permettre d'aménager deux évidements latéraux constituant des logements de protection des jambes du conducteur.

De préférence, la forme proéminente du container est aménagée pour former deux logements pour les pieds du conducteur.

Il est prévu que la base arrière du container est conformée pour offrir un logement à un groupe moto-propulseur monté sur le châssis du véhicule.

Il est préférable que le châssis comporte une partie inférieure de plate-forme abaissée entre la roue avant et la roue arrière, sur laquelle est fixée la partie inférieure du coffre de chargement de façon à abaisser le centre de gravité.

Selon une alternative, la partie inférieure et/ou antérieure du container comporte des éléments de fixation coopérant avec un système de fixation monté sur la partie inférieure et/ou antérieure du châssis.

De préférence, la partie inférieure du coffre est profilée en creux axialement pour envelopper la partie inférieure du châssis du véhicule.

De préférence, la partie antérieure du coffre comporte deux portions latérales projetées en avant de façon à envelopper la partie antérieure du châssis et le mécanisme de direction du véhicule.

De préférence, le coffre présente un profil transversal s'élargissant de la partie inférieure vers la partie supérieure, en forme de lettre U ou de lettre V, avec des flancs obliques, afin de préserver une garde au sol lorsque le véhicule est penché latéralement.

De préférence, le coffre présente une surface de section transversale croissante suivant la direction axiale dans un sens allant de la partie antérieure vers le logement des jambes du conducteur, afin de former un profil aérodynamique.

De préférence, les parois du coffre comportent des nervures profilées en creux pour rigidifier le coffre.

Avantageusement, la partie antéro-supérieure du coffre comporte des pans latéraux abattus de façon à dégager un espace de mouvement pour le guidon et les commandes.

Avantageusement, la partie supérieure du coffre comporte des gorges creusées en forme d'arc de cercle autour de l'axe de la fourche pour dégager la trajectoire de mouvement du guidon.

### BREVE DESCRIPTION DES DESSINS

D'autres objectifs, caractéristiques et avantages de l'invention apparaîtront à la lecture de la description des modes de réalisations préférés qui va suivre, en regard des dessins annexés, sur lesquels :
- la figure 1 représente une vue cavalière du dispositif de véhicule deux roues à moteur équipé d'un coffre de chargement, selon l'invention,
- la figure 2 représente une vue de profil du dispositif motocycle équipé d'un coffre de chargement selon l'invention, avec son capôt en position d'ouverture,
- la figure 3 représente une vue de dessus du dispositif motocycle équipé d'un coffre de chargement, selon l'invention,
- la figure 4 représente une vue latérale du dispositif motocycle équipé d'un coffre de chargement, selon l'invention,
- la figure 5 représente une vue de face du dispositif motocycle équipé d'un coffre de chargement, selon l'invention,
- la figure 6 représente une vue arrière du dispositif motocycle équipé d'un coffre de chargement, selon l'invention,
- la figure 7 représente une vue de trois-quart arrière du dispositif motocycle équipé d'un coffre de chargement, selon l'invention, avec le capôt en position d'ouverture,
- la figure 8 représente une vue de dessus d'un coffre de chargement, selon une forme de réalisation de l'invention,
- la figure 9 représente une vue de face du coffre selon la forme de réalisation de la figure 8,
- la figure 10 représente une vue de dessous du coffre selon la forme de réalisation des figures 8 et 9
- la figure 11 représente une vue latérale du coffre selon la forme de réalisation des figures 8 à 10, en montrant le container sans le capot d'ouverture, et
- la figure 12 représente une vue plongeante du coffre selon la forme de réalisation des figures 8 à 11, en montrant l'intérieur du container à travers l'ouverture, sans capot, de l'arrière du coffre.

### DESCRIPTION DETAILLEE DES MODES DE REALISATION PREFERES

Il est envisagé de mettre en oeuvre l'invention de deux manières alternatives préférentielles. La première manière consiste à réaliser un coffre de chargement modulaire qui est monté de façon escamotable sur un dispositif de motocycle correspondant. La seconde manière consiste à concevoir un dispositif complet de motocycle spécifique intégrant à demeure l'équipement du coffre de chargement.

### 1. Première manière de réaliser l'invention

L'invention est mise en oeuvre de préférence sur un véhicule deux roues à moteur, ayant un cadre ouvert 1 ou un châssis 1 à plate-forme basse, de type scooter.

Il peut s'agir indifféremment d'un motocycle de petite cylindrée inférieure à 50 cm³ (cyclomoteur), de moyenne cylindrée comprise entre 50 et 125 cm³ (motocyclette légère ou vélomoteur) ou de cylindrée supérieure à 125 cm³ (motocyclette).

Classiquement, un motocycle à cadre ouvert comprend un cadre ou châssis 1 comportant une partie de plate-forme abaissée entre la roue avant 3 et la zone arrière 6,7, un mécanisme de direction comportant une fourche 4 et un guidon 5 pour contrôler la roue avant 3, la tête de fourche 4 étant montée sur une partie antérieure oblique du châssis 1 qui forme ou auquel est fixé le tablier avant.

A l'arrière, un groupe moto-propulseur 7 est monté de façon articulée sur la partie postérieure de la plate-forme du châssis 1 pour entraîner la roue arrière 6. La roue arrière est reliée au châssis 1 par cette transmission articulée 7 et par un système de suspension à amortisseur qui maintient l'articulation en position.

Classiquement le groupe moto-propulseur 7 est disposé à la base d'une coque surmontée d'une selle pour le conducteur. C'est la coque qui est aménagée habituellement pour former un boîtier pour casque. Les motocycles à cadre ouvert offrent un espace étendu entre le tablier avant et le montant de la selle pour que le conducteur assis sur la selle puisse disposer ses jambes confortablement.

Selon l'invention, il est prévu d'escamoter le support de selle et de disposer un coffre 8 de forme proéminente occupant tout l'espace situé entre le tablier avant 4 et l'emplacement du support de selle 10.

Le coffre est constitué d'un container 8 de forme proéminente, c'est-à-dire d'un réceptacle de grandes dimensions à parois renforcées apte à contenir des objets ou des marchandises en vue d'un transport et à résister à des chocs.

Le container peut être réalisé en tôle métallique emboutie.

Le container 8 est réalisé de préférence en matériau polymère durci, notamment en résine polyester armée de fibres de verre, mousse acrylonitrile-butadiène-styrène (A.B.S.) ou de préférence en polyéthylène thermodurci. La réalisation du container 8 avec sa forme proéminente est effectuée de préférence par moulage, notamment par injection ou par rotomoulage. Le container 8 peut avoir une forme éminemment variable, en restant cependant adapté au montage sur le châssis 1 du motocycle et à l'assise 9,10,14 du conducteur.

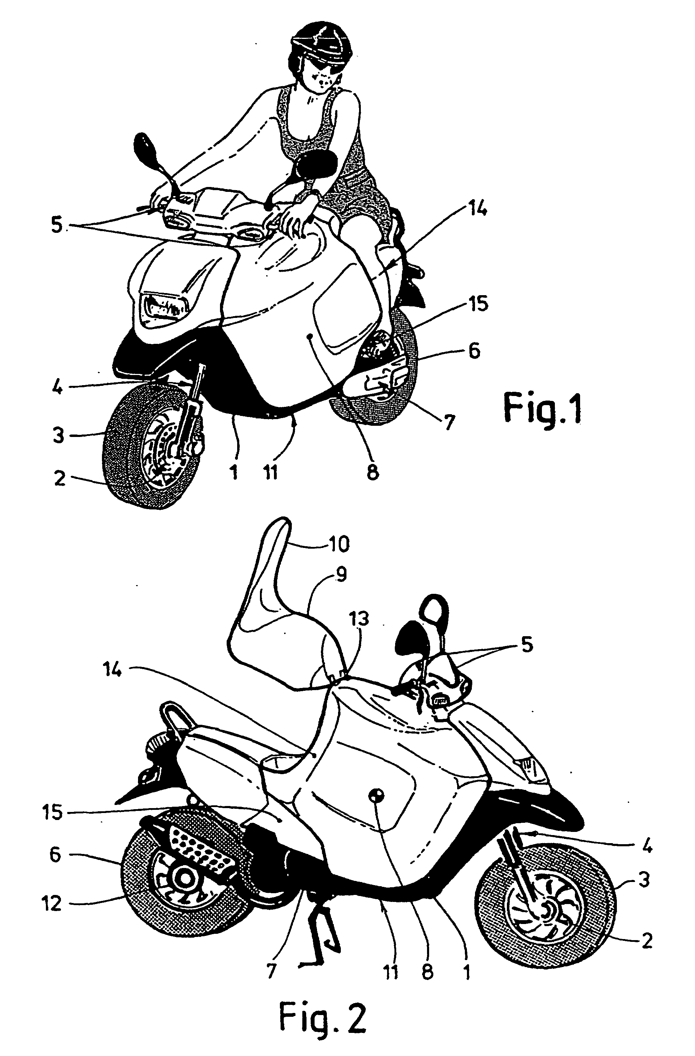

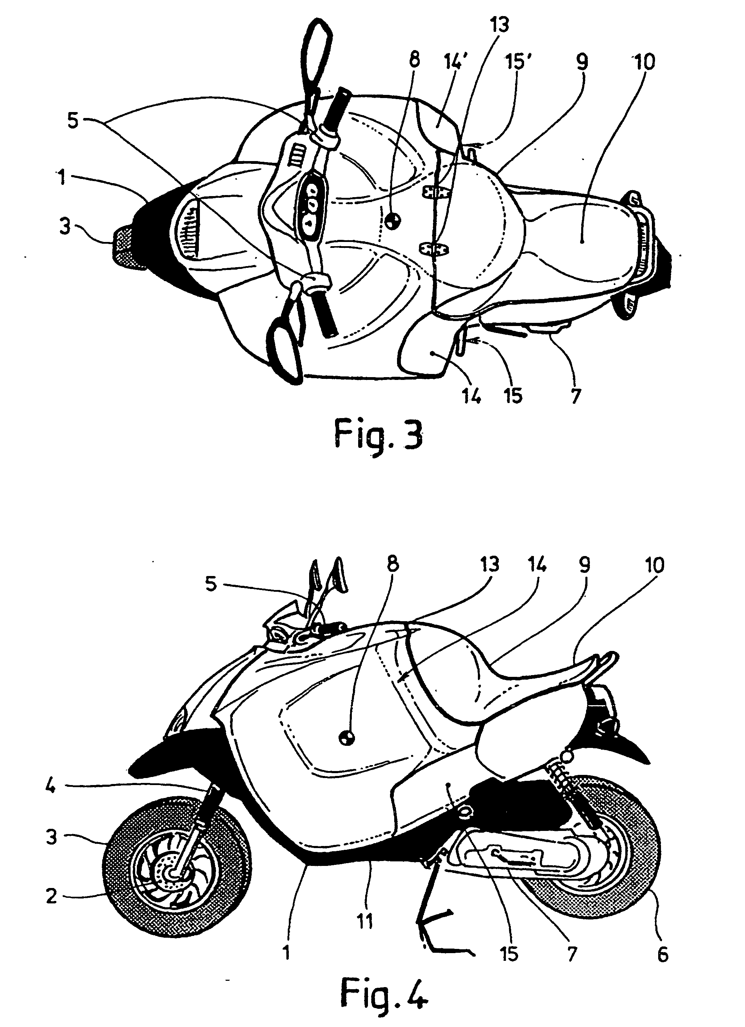

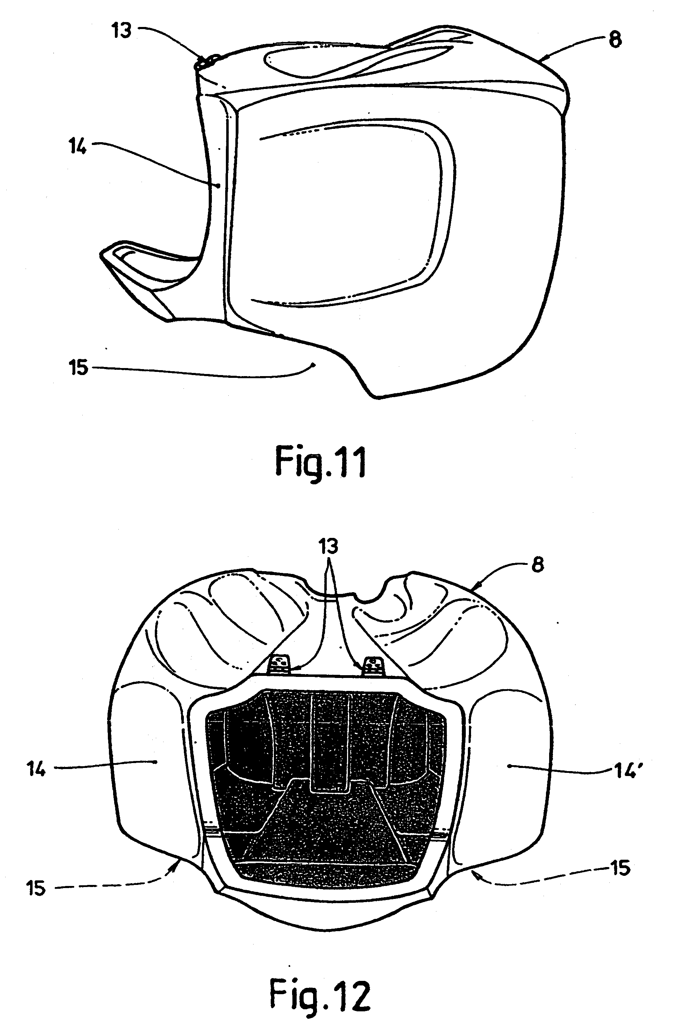

Comme le montre les illustrations des figures 1 à 12, qui montrent un coffre de chargement 8 destiné à équiper un cyclomoteur à cadre ouvert 1 d'un modèle courant, de type "scooter", les dimensions du coffre sont développées dans toutes les directions pour obtenir une forme proéminente offrant un volume de chargement maximal.

Dans l'exemple de réalisation des figures 1 à 12, les dimensions axiales, transversales et verticales du coffre sont du même ordre de grandeur, si bien que le volume principal du coffre 8 ressemble globalement à une forme intermédiaire entre un volume cubique et un volume sphérique.

Le coffre 8 présente donc un volume de chargement globalement convexe.

Les dimensions du coffre 8 sont de l'ordre de un demi-mètre à un mètre, si bien que le volume de chargement peut atteindre une valeur de l'ordre de une à quelques centaines de litres.

Selon l'invention, le coffre 8 comporte à sa partie inférieure, voire sa partie antérieure, des moyens de fixation permettant d'amarrer solidement le coffre 8 sur le châssis 1.

De multiples modes de fixation peuvent être adoptés. Sur certains scooters de type connu, le tablier avant est fixé par un ensemble d'écrous et de boulons qui peuvent être adoptés pour fixer le coffre de chargement 8 selon l'invention, après suppression du tablier.

Il est préférable de prévoir un nombre important de points de fixation sur le châssis 1, car le châssis permet avantageusement de transporter une masse assez conséquente.

Il est prévu de préférence que la forme proéminente et globalement convexe du coffre 8 est aménagée pour envelopper le châssis 1 du motocycle.

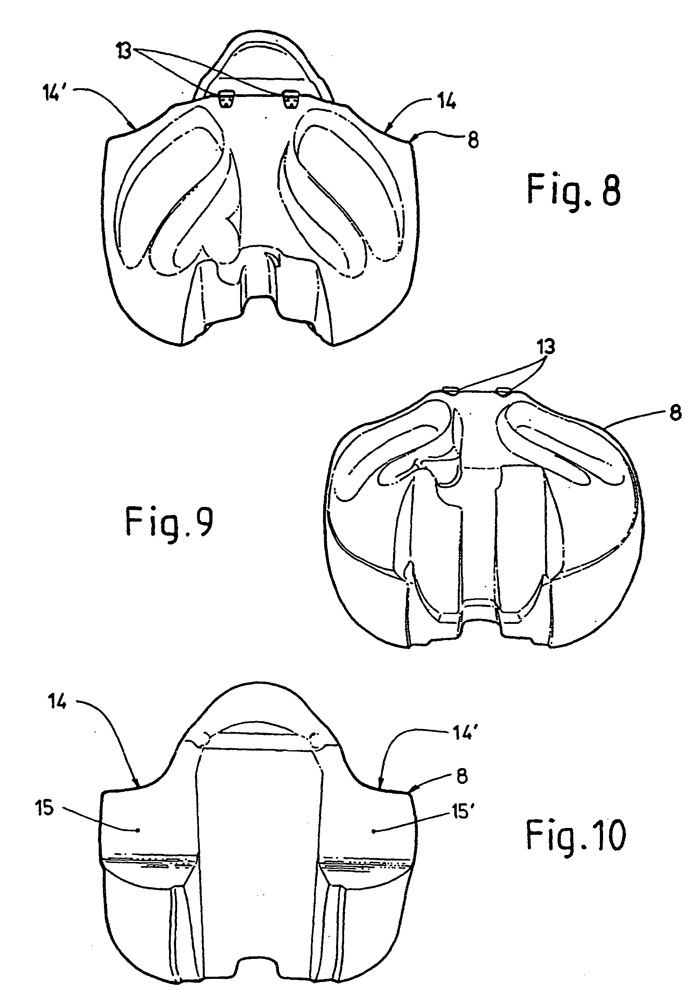

Ainsi, comme le montre la figure 10, il est prévu que la partie inférieure du coffre 8 comporte une inportante saignée axiale correspondant à la forme du châssis 1, de façon à envelopper la partie inférieure de plate-forme du châssis 1 du motocycle.

De même, il est prévu que la partie antérieure du coffre 8 de chargement comporte une importante saignée axiale correspondant à la forme de la partie antérieure oblique du châssis 1.

Ainsi, quand le coffre de chargement 8 est monté sur le châssis 1, celui-ci s'encastre dans la partie inférieure des joues proéminentes du coffre 8 et dans la partie antérieure projetée en avant du coffre 8.

De façon avantageuse, l'encastrement du châssis 1 dans la saignée axiale du coffre 8 renforce la fixation et la stabilité mécanique du coffre 8 sur le châssis 1.

Autre avantage, l'enveloppement du châssis 1 par les proéminences latérales du coffre confère au véhicule une ligne fluide et améliore son coefficient de pénétration dans l'air.

L'avantage essentiel de ce profil en creux est de former des nervures axiales qui augmentent la rigidité du coffre 8.

En effet, comme on peut le voir sur les figures 8 à 10, les saignées creusées axialement dans la forme proéminente du coffre 8 forment des côtes, arêtes et nervures qui empêchent la déformation du coffre 8 et augmentent sa rigidité, selon le principe mécanique du nervurage.

D'autres nervures peuvent être tracées sur les parois du coffre 8, notamment sur les parois latérales et sur la partie supérieure pour augmenter la rigidité du coffre 8.

Pour achever le profil aérodynamique du coffre de chargement et du motocycle, le coffre 8 présente avantageusement un volume dont la section transversale croit d'avant vers l'arrière (c'est-à-dire depuis le tablier avant ou la partie antérieure 4 du motocycle jusqu'au logement 14,14' des jambes du conducteur), progressivement sans décrochement.

Selon une variante, le coffre 8 peut également être caréné pour améliorer la pénétration dans l'air. Un carénage avec des plaques métalliques de renfort du container peut encore être prévu.

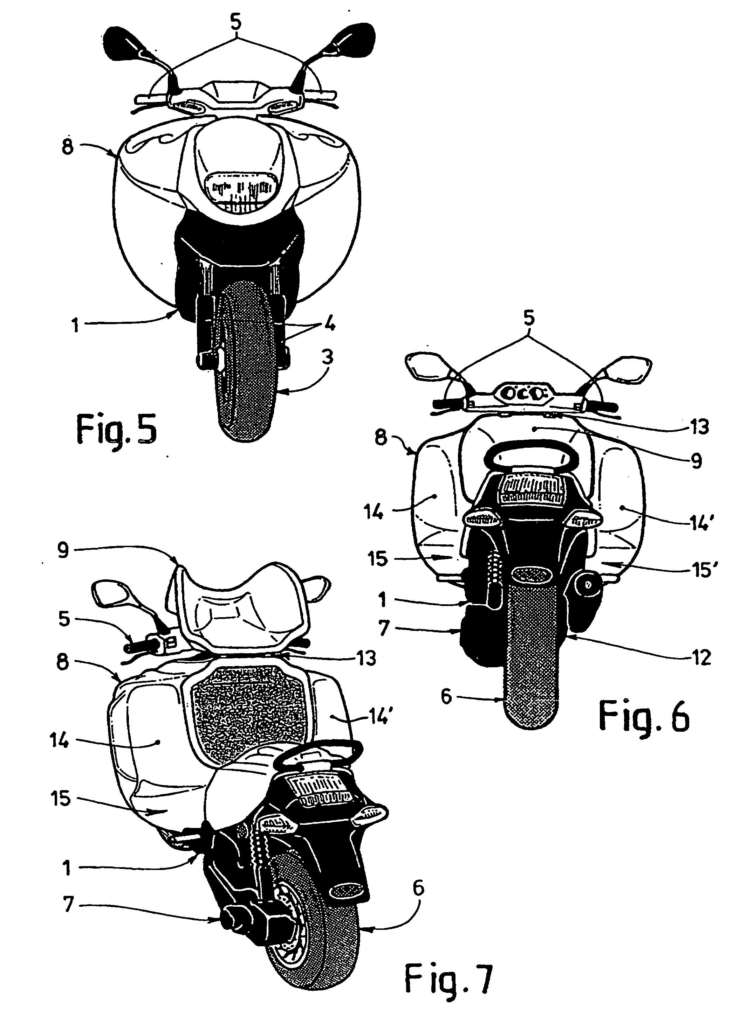

Sur la vue de face du coffre de chargement 8, selon l'exemple de réalisation illustré sur les figures 5 et 9, il apparaît que le profil transversal du coffre 8 a de préférence une forme de lettre U ou de lettre V, le profil s'élargissant depuis la partie inférieure fixée au châssis 1 jusqu'à la partie supérieure 13 libre.

Le coffre 8 présente ainsi, de préférence, des flancs obliques.

De façon avantageuse, le profil du coffre 8 avec les flancs obliques permet de préserver la garde au sol du véhicule équipé du coffre lorsqu'il penche latéralement dans les virages, en évitant que le coffre ne touche la route.

Un autre avantage du profil en forme de lettre U ou de lettre V est de permettre automatiquement un excellent positionnement de la charge, de façon centrée, auprès de l'axe longitudinal du véhicule entre les deux roues 3-6.

Ainsi, même si le chargement n'est pas fixé ou bloqué dans le coffre 8, la charge se place naturellement au fond de la cuvette constituée par la partie inférieure du coffre de chargement 8, ce qui optimise la position du centre de gravité auprès de l'axe longitudinal, au centre ou dans la partie médiane entre les deux roues 3-6, et en outre en position surbaissée.

Le coffre de chargement 8 étant destiné au transport de charges lourdes et volumineuses, il est prévu que le coffre comporte une vaste ouverture de chargement.

L'ouverture de chargement peut atteindre des dimensions en hauteur et en largeur de l'ordre d'une dizaine de centimètres à plusieurs dizaines de centimètres, typiquement entre un tiers et un demi-mètre.

Il est prévu selon l'invention, de disposer l'ouverture de chargement à la partie supérieure ou postérieure du coffre 8 en l'orientant de préférence en direction du haut 13 et de l'arrière 10.

Cette disposition analogue à un coffre de voiture est particulièrement commode d'emploi.

Maintenant selon l'invention, il est prévu que dans la position de conduite, le conducteur est juché sur le coffre 8, à califourchon sur la partie arrière 9 du coffre.

Comme il est généralement nécessaire d'escamoter le support de selle d'origine pour monter le coffre de chargement 8 sur la plate-forme des motocycles de type disponible dans le commerce, il est prévu selon l'invention, que l'ouverture arrière du container 8 sera fermée par un capot 9 qui constituera lui-même avantageusement le support de selle 10 du conducteur.

Ainsi, comme le montre la figure 2, selon le meilleur mode de réalisation de l'invention, l'ouverture de chargement est obturée par un capôt amovible 9 auquel est donnée une forme de selle 10 adaptée au conducteur.

Selon l'exemple de réalisation des figures 2 à 4, le capot d'ouverture 9 peut comporter deux parties 9,10 conformées pour s'adapter à l'anatomie du conducteur, le capot comportant une base d'assise 10 du conducteur (destinée à être disposée horizontalement ou en pente légère vers l'avant) et une garde 9 de forme courbe (destinée à être diposée verticalement ou en oblique vers l'avant).

De préférence, le capot 9 est constitué par une enveloppe refermée sur elle-même pour constituer une double paroi de renfort, ce qui évite les déformations sous le poids du conducteur. Le capot 9 peut aussi constituer un simple support de selle 10 destiné à être recouvert d'une garniture de selle.

Le capot 9 est de préférence monté sur un axe de rotation 13 constitué par des charnières disposées sur le dessus du coffre 8, de sorte que le capot 9 s'ouvre par rotation vers le guidon 5.

Alternativement, le capot peut être monté sur un axe de rotation disposé à l'arrière du véhicule pour s'ouvrir vers l'arrière.

Autre variante, le capot 9 peut être monté en rotation sur un axe disposé sur le côté pour que le coffre 8 s'ouvre latéralement.

Le capot 9 peut aussi s'escamoter complètement sans être attaché au coffre 8, ni au véhicule.

De préférence, le capot 9 est monté sur un ou deux vérins aptes à le maintenir en position ouverte pour le chargement/déchargement, comme les coffres et hayons de voitures classiques.

Il est prévu que le coffre 8 comporte un système de verrouillage avec des moyens complémentaires de verrouillage montés d'une part sur le capot 9, d'autre part sur le coffre 8 ou sur le véhicule.

Le capot 9 est ainsi maintenu en place et le chargement du véhicule est protégé du vandalisme.

Maintenant, en vue de l'utilisation, il est donc convenu que le coffre de chargement 8 est monté sur le châssis 1 du véhicule.

Le chargement du coffre 8 est effectué à l'arrêt par l'ouverture du coffre en soulevant le capot-support de selle 9-10.

Le chargement se positionne naturellement au fond du coffre 8 de façon centrée sur l'axe longitudinal 3-6 du véhicule et de façon centrée ou médiane entre la roue avant 3 et la roue arrière 6. Le centre de gravité du chargement se positionne ainsi de façon abaissée au plus près de la plate-forme ou partie inférieure du châssis 1 du véhicule à deux roues.

A l'arrêt ou en déplacement à faible vitesse, le véhicule rempli de son chargement présente alors une bonne stabilité car la charge s'applique au centre de l'engin avec un montent latéral minimisé par l'abaissement et le centrage du centre de gravité.

Le conducteur peut alors s'installer aisément sur la selle 10 en chevauchant la partie arrière 9-14 du coffre 8 en position stable et confortable, comme l'illustre la figure 1.

La figure 1 montre également que, selon l'invention, la forme proéminente du coffre 8 offre la possibilité d'aménager deux logements 14,15 pour les jambes et les pieds du conducteur.

Ces logements 14,15 sont formés par des évidements aménagés sur les bords arrières et sur les bords inférieurs du coffre 8.

Ces logements 14,14',15,15' pour les jambes ou les pieds peuvent aussi être formés naturellement par la diminution de la forme proéminente du coffre 8 à la limite de sa partie arrière et de sa partie inférieure.

Les logements des jambes 14,14' sont aménagés en fonction de la position assise du conducteur sur le support de selle 10 formé par le capot 9.

Les logements des pieds 15,15' sont aménagés en fonction de la position des repose-pieds du motocycle.

Le conducteur peut alors s'installer sur la partie de selle 10 du capôt 9 en disposant ses jambes et ses pieds dans les logements latéraux 14,14',15,15' qui offrent avantageusement une protection en cas de choc latéral.

De façon avantageuse, les logements latéraux 14,14',15,15' formés en aménageant la forme proéminente du coffre 8, offrent aussi une protection aux intempéries, aussi bien le vent et la pluie, que les éclaboussures.

De façon avantageuse, il est prévu que la jonction entre la bordure du capôt-support de selle 9-10 et le bord de l'ouverture du container 8 coïncident spatialement et sont munies d'un joint d'étanchéïté et de rainures d'évacuation d'eau.

En déplacement, le coffre de chargement 8 présente un centre de gravité centré au milieu de l'axe du véhicule, en position surbaissée, ce qui offre la meilleure stabilité possible au véhicule.

En particulier, le positionnement de la charge dans la partie médiane, entre la roue avant 3 et la roue arrière 6, offre la meilleure répartition de charge sur les deux roues du véhicule en préservant une bonne motricité et un bon freinage.

L'éloignement du centre de gravité par rapport à l'axe 12 de la roue arrière 6 prévient tout risque de cabrement sur la roue arrière 6.

Inversement, l'éloignement du centre de gravité par rapport à l'axe 2 de la roue avant 3 évite un risque de perte de contrôle en cas de freinage vigoureux.

Enfin, il faut noter que le coffre de chargement 8 selon l'invention préserve la visibilité et la maniabilité de tous les équipements du motocycle, la visibilité des feux étant conservée, et l'accessibilité des commandes 5 maintenue.

On peut noter qu'il est prévu avantageusement que la partie supérieure du coffre 8 est creusée de gorges en arc de cercle autour de la fourche 4. Ces gorges libèrent un espace de mouvement enprunté par les manettes de commande et par les équipements du guidon 5, lors de sa rotation.

Il est prévu en outre que les parties latérales à l'avant et en haut du coffre 8 présentent des pans abattus, comme des épaulements, pour libérer également un espace de mouvement du guidon 5 et des commandes.

Finalement, il apparaît que le véhicule deux roues équipé d'un coffre de chargement 8 selon l'invention constitue un dispositif complet protégeant et sécurisant le transport du chargement, en offrant un excellent comportement mécanique.

Il s'ensuit que le véhicule complet peut être adopté pour de multiples utilisations : livraisons, coursiers, véhicule de dépannage ou d'artisanat, voyages. Il peut par conséquent faire l'objet d'une réalisation intégrée comme suit.

### 2. Meilleure manière de réaliser l'invention

Selon l'invention, il est alors prévu de réaliser un dispositif motocycle équipé de manière permanente d'un tel coffre de chargement 8.

Le dispositif est donc constitué sur la base d'un motocycle classique et comprend :
- un châssis 1,
- un mécanisme de direction de la roue avant 3 comportant une fourche 4 et un guidon 5,
- un groupe moto-propulseur 7 articulé sur le châssis pour entraîner la roue arrière 6, et
- une partie constituant un support de selle 10 pour un conducteur.

Selon l'invention, le dispositif motocycle est équipé d'un coffre de chargement 8 de forme proéminente disposé entre la roue avant 3 et la roue arrière 6, en étant fixé à demeure sur le chassis 1 du dispositif.

Le dispositif motocycle équipé du coffre de chargement 8, selon l'invention, est ensuite constitué en suivant les modes de réalisations et variantes exposés précédemment.

Le véhicule motocycle selon l'invention peut notamment être réalisé en plusieurs parties et en matériaux différents faisant appel aux éléments en tôles d'acier et aux matériaux polymères, selon les techniques mises en oeuvre quotidiennement dans l'industrie automobile.

Il apparait en conclusion que le dispositif de motocycle et le coffre de chargement selon l'invention, offrent une multitude de développements, d'adaptation, d'applications et de débouchés qui ne peuvent être décrites dans la présente.

D'autres utilisations, variantes, modes de réalisations, améliorations et perfectionnements pourront être mis en oeuvre par l'homme de métier sans sortir du cadre de la présente invention, l'objet de la protection étant défini dans les revendications ci-après.

## Revendications

1. Coffre de chargement (8) destiné à équiper un véhicule deux roues à moteur, pour augmenter la capacité de chargement, tout en sécurisant le transport du chargement sur le véhicule, le coffre étant formé d'un container (8) apte à se positionner entre la roue avant (3) et la roue arrière (6) du véhicule et comportant des moyens de fixation sur le châssis (1) du véhicule, le container enveloppant un volume de chargement s'étendant entre la roue avant et la roue arrière, de sorte que le volume de chargement (8) présente un barycentre se plaçant en position médiane et en position surbaissée par rapport aux deux roues (3-6), le coffre (8) étant équipé d'une ouverture de chargement et d'un capot d'ouverture (9) monté de façon amovible à la partie supérieure (13) du container (8),
**caractérisé en ce qu'**il présente une forme proéminente latéralement, le volume de chargement (8) atteignant de l'ordre d'une à plusieurs centaines de litres, l'emplacement et la taille des proéminences du coffre étant dimensionnés de façon à aménager deux logements latéraux (14,14') pour des jambes d'un conducteur afin de constituer une protection en cas de choc latéral.

2. Coffre de chargement selon la revendication 1, **caractérisé en ce qu'**il a des dimensions transversales atteignant de l'ordre de un demi-mètre à un mètre.

3. Coffre de chargement selon la revendication 1 ou 2, **caractérisé en ce qu'**il comporte une partie de selle (9,10,14) de conducteur.

4. Coffre de chargement, selon l'une des revendications 1 à 3, **caractérisé en ce que** le capot d'ouverture (9) forme un support de selle (10) pour le conducteur.

5. Coffre de chargement selon l'une des revendications 1 à 4, **caractérisé en ce que** le capot d' ouverture (9) et l'ouverture de chargement sont disposés et orientés vers l'arrière de la partie supérieure du container (8).

6. Coffre de chargement selon l'une des revendications 1 à 5, **caractérisé en ce que** le capot d'ouverture (9) est articulé sur un axe de rotation (13) monté à la partie supérieure du coffre (8) de façon à permettre d'ouvrir le capot (9) par rotation vers le guidon (5) du véhicule.

7. Coffre de chargement selon l'une des revendications 1 à 6, **caractérisé en ce que** le container (8) présente deux joues proéminentes sensiblement symétriques par rapport à un plan axial, l'emplacement et la taille des joues proéminentes étant choisis pour permettre d'aménager deux évidements latéraux (14,14') constituant des logements de protection des jambes du conducteur.

8. Coffre de chargement selon l'une des revendications 1 à 7, **caractérisé en ce que** la forme proéminente du container (8) est aménagée pour former deux logements (15,15' ) pour les pieds du conducteur.

9. Coffre de chargement selon l'une des revendications 1 à 8, **caractérisé en ce que** la partie inférieure du container (8) comporte une rainure axiale profilée en creux pour envelopper la partie inférieure du châssis (1) du véhicule.

10. Coffre de chargement selon l'une des revendications 1 à 9, **caractérisé en ce que** la partie antérieure du container (8) comporte une portion axiale en retrait entourée par deux portions latérales se projetant en avant pour envelopper la partie antérieure du châssis (1) du véhicule.

11. Coffre de chargement selon l'une des revendications 1 à 10, **caractérisé en ce que** le container (8) présente un profil transversal s'élargissant de bas en haut, notamment un profil en forme de lettre U ou de lettre V, avec des flancs obliques, afin de préserver une garde au sol lorsque le véhicule est penché latéralement.

12. Coffre de chargement selon l'une des revendications 1 à 11, **caractérisé en ce que** le container (8) présente des sections transversales de surface croissante dans la direction axiale en allant de la partie antérieure (4) vers le logement (14) des jambes du conducteur, afin de former un carénage aérodynamique.

13. Coffre de chargement selon l'une des revendications 1 à 12, **caractérisé en ce que** la partie antéro-supérieure du container (8) comporte des pans latéraux abattus de façon à dégager un espace de mouvement pour le guidon (5) et les commandes.

14. Coffre de chargement selon l'une des revendications 1 à 13, **caractérisé en ce que** la partie supérieure du container (8) comporte des gorges se développant en arc de cercle autour de l'axe du guidon pour dégager la trajectoire de mouvement du guidon (5) et des commandes.

15. Coffre de chargement selon l'une des revendications 1 à 14, **caractérisé en ce que** les parois du container (8) présentent des nervures profilées en creux pour rigidifier le container.

16. Coffre de chargement selon l'une des revendications 1 à 15, **caractérisé en ce que** le container (8) est réalisé en matériau polymère.

17. Coffre de chargement selon l'une des revendications 1 à 16, **caractérisé en ce que** le container (8) est réalisé en résine polyester armée ou stratifiée.

18. Coffre de chargement selon l'une des revendications 1 à 17, **caractérisé en ce que** le container (8) est réalisé par rotomoulage .

19. Coffre de chargement selon l'une des revendications 1 à 18, **caractérisé en ce qu'**il est modulaire et destiné à être monté de façon escamotable sur un dispositif de motocycle, la partie inférieure et/ou antérieure du container (8) comportant des éléments de fixation aptes à coopérer avec un système de fixation monté sur la partie inférieure et/ou antérieure du châssis (1).

20. Dispositif de véhicule deux roues à moteur, **caractérisé en ce qu'**il est équipé d'un coffre de chargement (8) selon l'une des revendications 1 à 19.

21. Dispositif de véhicule deux roues à moteur, comprenant :
- un châssis (1),
- un mécanisme de direction de la roue avant (3) comportant une fourche (4) et un guidon (5),
- un groupe moto-propulseur (7) articulé sur le châssis pour entraîner la roue arrière (6), et
- une partie constituant un support de selle (10) pour un conducteur,
le dispositif étant équipé d'un coffre de chargement (8) destiné à augmenter la capacité de chargement tout en sécurisant le transport du chargement sur le véhicule, le coffre de chargement étant formé d'un container (8) fixé sur le châssis (1) entre la roue (3) avant et la roue arrière (6) du véhicule, le container enveloppant un volume de chargement (8) s'étendant entre la roue avant et la roue arrière et présentant un barycentre disposé en position médiane et en position surbaissée par rapport à l'intervalle entre les deux roues (3-6), le groupe moto-propulseur (7) étant disposé sous la base arrière du coffre (8), le coffre comportant une ouverture de chargement et un capot d'ouverture (9) monté de façon amovible à la partie supérieure (13) du container,
**caractérisé en ce que** le coffre (8) présente une forme proéminente latéralement, le volume de chargement atteignant de l'ordre d'une à plusieurs centaines de litres, l'emplacement et la taille des proéminences du coffre (8) étant dimensionnés de façon à aménager deux logements latéraux (14,14') pour les jambes du conducteur afin de constituer une protection en cas de choc latéral.

22. Dispositif selon la revendication 21, **caractérisé en ce que** le coffre (8) atteint des dimensions transversales de l'ordre de un demi-mètre à un mètre.

23. Dispositif selon la revendication 21 ou 22, **caractérisé en ce que** au moins une partie du coffre (9-10-14) forme au moins une partie du support de selle (10) pour le conducteur.

24. Dispositif selon l'une des revendications 21 à 23, **caractérisé en ce que** le capot d'ouverture (9) forme le support de selle (10) pour le conducteur.

25. Dispositif selon l'une des revendications 21 à 24, **caractérisé en ce que** l'ouverture de chargement et le capot d'ouverture (9) du coffre sont disposés et orientés à l'arrière de la partie supérieure du container (8).

26. Dispositif selon l'une des revendications 21 à 25, **caractérisé en ce que** le capot d'ouverture (9) est articulé sur un axe de rotation (13) monté à la partie supérieure du coffre (8) de façon à permettre d'ouvrir le capot (9) par rotation vers le guidon (5) du véhicule.

27. Dispositif selon l'une des revendications 21 à 26, **caractérisé en ce que** le coffre (8) comporte deux joues proéminentes, sensiblement symétriques par rapport à un plan axial, l'emplacement et la taille des joues proéminentes étant disposés en aménageant deux évidements latéraux (14,14') constituant des logements de protection des jambes du conducteur.

28. Dispositif selon l'une des revendications 21 à 27, **caractérisé en ce qu'**il comporte deux logements (15,15') pour les pieds du conducteur, la forme proéminente du coffre (8) étant aménagée pour former les deux logements (15,15') qui constituent une protection en cas de choc latéral pour les pieds du conducteur.

29. Dispositif selon l'une des revendications 21 à 28, **caractérisé en ce que** la partie inférieure du coffre (8) est profilée en creux axialement pour envelopper la partie inférieure du châssis (1) du véhicule.

30. Dispositif selon l'une des revendications 21 à 29, **caractérisé en ce que** la partie antérieure du coffre (8) comporte deux portions latérales projetées en avant de façon à envelopper la partie antérieure du châssis (1) et le mécanisme de direction (4) du véhicule.

31. Dispositif selon l'une des revendications 21 à 30, **caractérisé en ce que** le coffre (8) présente un profil transversal s'élargissant de la partie inférieure vers la partie supérieure, notamment un profil en forme de lettre U ou de lettre V, avec des flancs obliques, afin de préserver une garde au sol lorsque le véhicule est penché latéralement.

32. Dispositif selon l'une des revendications 21 à 31, **caractérisé en ce que** le coffre (8) présente des sections transversales de surface croissante suivant la direction axiale dans un sens allant de la partie antérieure vers le logement (14,14') des jambes du conducteur, afin de former un carénage aérodynamique.

33. Dispositif selon l'une des revendications 21 à 32, **caractérisé en ce que** la partie antéro-supérieure du coffre (8) comporte des pans latéraux abattus de façon à dégager un espace de mouvement pour le guidon (5) et les commandes.

34. Dispositif selon l'une des revendications 21 à 33, **caractérisé en ce que** la partie supérieure du coffre (8) comporte des gorges creusées en forme d'arc de cercle autour de l'axe de la fourche (4) pour dégager la trajectoire de mouvement du guidon (5) et des commandes.

35. Dispositif selon l'une des revendications 21 à 34, **caractérisé en ce que** les parois du coffre (8) comportent des nervures profilées en creux pour rigidifier le coffre.

36. Dispositif selon l'une des revendications 21 à 35, **caractérisé en ce que** le châssis (1) comporte une partie inférieure de plate-forme (11) abaissée entre la roue avant (3) et la roue arrière (6), sur laquelle est fixée la partie inférieure du coffre de chargement (8) de façon à abaisser le centre de gravité.

## Patentansprüche

1. Kofferraum (8) zum Ausrüsten eines Zweiradkraftfahrzeugs, zum Erhöhen der Ladekapazität und Sichern des Transports der Ladung auf dem Fahrzeug, welcher Kofferraum aus einem Behälter (8) geformt ist, der geeignet ist, zwischen dem Vorderrad (3) und dem Hinterrad (6) des Fahrzeugs platziert zur werden und Mittel zur Befestigung auf dem Fahrgestell (1) des Fahrzeugs aufweist, welcher Behälter ein Ladevolumen umgibt, das sich zwischen dem Vorderrad und dem Hinterrad erstreckt, derart, dass das Ladevolumen (8) einen Schwerpunkt aufweist, der in mittlerer Position und tiefer gelegter Position in Bezug auf die beiden Räder (3-6) platziert ist, wobei der Kofferraum (8) mit einer Ladeöffnung und einer Öffnungshaube (9) ausgerüstet ist, die in lösbarer Form am oberen Abschnitt (13) des Behälters (8) montiert ist,
**dadurch gekennzeichnet, dass** er eine seitlich vorspringende Form aufweist, das Ladevolumen (8) die Größenordnung von einem oder mehreren hundert Litern erreicht, die Stelle und die Größe der Vorsprünge des Kofferraums so dimensioniert sind, dass zwei seitliche Aufnahmen (14, 14') für die Beine eines Fahrers ausgebildet sind, um einen Schutz im Falle eines seitlichen Stoßes zu bilden.

2. Kofferraum nach Anspruch 1,
**dadurch gekennzeichnet, dass** er Querdimensionen in der Größenordnung eines halben Meters bis Meters erreicht.

3. Kofferraum nach Anspruch 1 oder 2,
**dadurch gekennzeichnet, dass** er einen Sattelabschnitt (9, 10, 14) für den Fahrer aufweist.

4. Kofferraum nach einem der Ansprüche 1 bis 3,
**dadurch gekennzeichnet, dass** die Öffnungshaube (9) eine Sattelstütze (10) für den Fahrer formt.

5. Kofferraum nach einem der Ansprüche 1 bis 4,
**dadurch gekennzeichnet, dass** die Öffnungshaube (9) und die Ladeöffnung zur Hinterseite des oberen Abschnitts des Behälters (8) angeordnet und orientiert sind.

6. Kofferraum nach einem der Ansprüche 1 bis 5,
**dadurch gekennzeichnet, dass** die Öffnungshaube (9) auf einer Drehachse (13) angelenkt ist, die an dem oberen Abschnitt des Kofferraums (8) so montiert ist, dass es möglich ist, die Haube (9) unter Drehung zur Lenkstange (5) des Fahrzeugs hin zu öffnen.

7. Kofferraum nach einem der Ansprüche 1 bis 6,
**dadurch gekennzeichnet, dass** der Behälter (8) zwei in Bezug auf eine Axialebene im Wesentlichen symmetrisch vorspringende Wangen aufweist, wobei die Stelle und die Größe der vorspringenden Wangen so gewählt sind, dass es möglich ist, zwei seitliche Ausnehmungen (14, 14'), welche Aufnahmen für den Schutz der Beine des Fahrers bilden, zu schaffen.

8. Kofferraum nach einem der Ansprüche 1 bis 7,
**dadurch gekennzeichnet, dass** die vorspringende Form des Behälters (8) so ausgebildet ist, dass zwei Aufnahmen (15, 15') für die Füße des Fahrers geformt sind.

9. Kofferraum nach einem der Ansprüche 1 bis 8,
**dadurch gekennzeichnet, dass** der untere Abschnitt des Behälters (8) eine hohlförmig profilierte, axiale Rinne aufweist, um den unteren Abschnitt des Fahrgestells (1) des Fahrzeug zu umhüllen.

10. Kofferraum nach einem der Ansprüche 1 bis 9,
**dadurch gekennzeichnet, dass** der vordere Abschnitt des Behälters (8) einen zurückbleibenden axialen Abschnitt aufweist, der von zwei seitlichen Abschnitten umgeben ist, die nach vorne gerichtet sind, um den vorderen Abschnitt des Fahrgestells (1) des Fahrzeugs zu umhüllen.

11. Kofferraum nach einem der Ansprüche 1 bis 10,
**dadurch gekennzeichnet, dass** der Behälter (8) ein sich von unten nach oben vergrößerndes Querprofil, insbesondere ein Profil in Form des Buchstabens U oder des Buchstabens V, mit schrägen Flanken aufweist, um einen Bodenschutz vorzusehen, wenn das Fahrzeug seitlich geneigt ist.

12. Kofferraum nach einem der Ansprüche-1 bis 11,
**dadurch gekennzeichnet, dass** der Behälter (8) Oberflächenquerabschnitte aufweist, die im Verlauf von dem vorderen Abschnitt (4) zur Aufnahme (14) der Beine des Fahrers in axialer Richtung zunehmen, um eine aerodynamische Stromlinienform zu bilden.

13. Kofferraum nach einem der Ansprüche 1 bis 12,
**dadurch gekennzeichnet, dass** der vordere obere Abschnitt des Behälters (8) seitlich getiefte Fächer aufweist, um einen Bewegungsraum für die Lenkstange (5) und die Steuerungen freizumachen.

14. Kofferraum nach einem der Ansprüche 1 bis 13,
**dadurch gekennzeichnet, dass** der obere Abschnitt des Behälters (8) Kehlen aufweist, die kreisbogenförmig um die Achse der Lenkstange verlaufen, um die Bewegungsbahn der Lenkstange (5) und der Steuerungen freizumachen.

15. Kofferraum nach einem der Ansprüche 1 bis 14,
**dadurch gekennzeichnet, dass** die Wand des Behälters (8) hohlförmig profilierte Rippen aufweist, um den Behälter zu versteifen.

16. Kofferraum nach einem der Ansprüche 1 bis 15,
**dadurch gekennzeichnet, dass** der Behälter (8) aus einem Polymermaterial gefertigt ist.

17. Kofferraum nach einem der Ansprüche 1 bis 16,
**dadurch gekennzeichnet, dass** der Behälter (8) aus verstärktem oder geschichtetem Polyesterharz gefertigt ist.

18. Kofferraum nach einem der Ansprüche 1 bis 17,
**dadurch gekennzeichnet, dass** der Behälter (8) durch Rotationsformen gefertigt ist.

19. Kofferraum nach einem der Ansprüche 1 bis 18,
**dadurch gekennzeichnet, dass** er modular aufgebaut ist und auf einem Kraftfahrzeug in versenkbarer Weise montiert werden soll, wobei der untere und/oder vordere Abschnitt des Behälters (8) Befestigungselement aufweist, die geeignet sind mit einem auf dem unteren und/oder vorderen Abschnitt des Fahrgestells (1) montierten Befestigungssystem zusammenzuwirken.

20. Zweiradkraftfahrzeug, **dadurch gekennzeichnet, dass** es mit einem Kofferraum (8) nach einem der Ansprüche 1 bis 19 ausgerüstet ist.

21. Zweiradkraftfahrzeug, welches umfasst:
- ein Fahrgestell (1),
- ein Mechanismus zur Lenkung des Vorderrads (3) mit einer Gabel (4) und einer Lenkstange (5),
- eine Motorantriebsgruppe (7), die auf dem Fahrgestell angelenkt ist, um das Hinterrad (6) anzutreiben, und
- einen Abschnitt, welcher eine Sattelstütze (10) für einen Fahrer bildet,
wobei das Fahrzeug mit einem Kofferraum (8) zum Erhöhen der Ladekapazität und Sicherung des Transports der Ladung auf dem Fahrzeug ausgerüstet ist, welcher Kofferraum aus einem Behälter (8) geformt ist, der auf dem Fahrgestell (1) zwischen dem Vorderrad (3) und dem Hinterrad (6) des Fahrzeugs befestigt ist, welcher Behälter ein Ladevolumen (8) umgibt, das sich zwischen dem Vorderrad und dem Hinterrad erstreckt und einen Schwerpunkt aufweist, der in mittlerer Position und tiefer gelegter Position in Bezug auf den Abstand der beiden Räder (3-6) angeordnet ist, welche Motorantriebsgruppe (7) unter der hinteren Basis des Kofferraums (8) angeordnet ist, wobei der Kofferraum mit einer Ladeöffnung und einer Öffnungshaube (9) ausgerüstet ist, die in lösbarer Form am oberen Abschnitt (13) des Behälters (8) montiert ist,
**dadurch gekennzeichnet, dass** der Kofferraum (8) eine seitlich vorspringende Form aufweist, das Ladevolumen (8) die Größenordnung von einem oder mehreren hundert Litern erreicht, die Stelle und die Größe der Vorsprünge des Kofferraums (8) so dimensioniert sind, dass zwei seitliche Aufnahmen (14, 14') für die Beine eines Fahrers ausgebildet sind, um einen Schutz im Falle eines seitlichen Stoßes zu bilden.

22. Fahrzeug nach Anspruch 21,
**dadurch gekennzeichnet, dass** der Kofferraum (8) Querdimensionen in der Größenordnung eines halben Meters bis Meters erreicht.

23. Fahrzeug nach Anspruch 21 oder 22,
**dadurch gekennzeichnet, dass** wenigstens ein Abschnitt des Kofferraums (9-10-14) wenigstens einen Teil der Sattelstütze (10) für den Fahrer formt.

24. Fahrzeug nach einem der Ansprüche 21 bis 23,
**dadurch gekennzeichnet, dass** die Öffnungshaube (9) die Sattelstütze (10) für den Fahrer formt.

25. Fahrzeug nach einem der Ansprüche 21 bis 24,
**dadurch gekennzeichnet, dass** die Ladeöffnung und die Öffnungshaube (9) des Kofferraums zur Hinterseite des oberen Abschnitts des Behälters (8) hin angeordnet und orientiert sind.

26. Fahrzeug nach einem der Ansprüche 21 bis 25,
**dadurch gekennzeichnet, dass** die Öffnungshaube (9) auf einer Drehachse (13) angelenkt ist, die an dem oberen Abschnitt des Kofferraums (8) so montiert ist, dass es möglich ist, die Haube (9) unter Drehung zur Lenkstange (5) des Fahrzeugs hin zu öffnen.

27. Fahrzeug nach einem der Ansprüche 21 bis 26,
**dadurch gekennzeichnet, dass** der Kofferraum (8) zwei in Bezug auf eine Axialebene im Wesentlichen symmetrisch vorspringende Wangen aufweist, wobei die Stelle und die Größe der vorspringenden Wangen so angeordnet sind, dass zwei seitliche Ausnehmungen (14, 14'), welche Aufnahmen für den Schutz der Beine des Fahrers bilden, ausgebildet sind.

28. Fahrzeug nach einem der Ansprüche 21 bis 27,
**dadurch gekennzeichnet, dass** es zwei Aufnahmen (15, 15') für die Füße des Fahrers aufweist, wobei die vorspringende Form des Kofferraums (8) so ausgebildet ist, dass sie die beiden Aufnahmen (15, 15'), die im Falle eines seitlichen Stoßes einen Schutz für die Füße des Fahrers bilden, formt.

29. Fahrzeug nach einem der Ansprüche 21 bis 28,
**dadurch gekennzeichnet, dass** der untere Abschnitt des Kofferraums (8) axial hohlförmig profiliert ist, um den unteren Abschnitt des Fahrgestells (1) des Fahrzeugs zu umhüllen.

30. Fahrzeug nach einem der Ansprüche 21 bis 29,
**dadurch gekennzeichnet, dass** der vordere Abschnitt des Kofferraums (8) zwei seitlich nach vorne gerichtete Abschnitte umfasst, um den vorderen Abschnitt des Fahrgestells (1) und den Lenkmechanismus (4) des Fahrzeugs zu umhüllen.

31. Fahrzeug nach einem der Ansprüche 21 bis 30,
**dadurch gekennzeichnet, dass** der Kofferraum (8) ein sich von dem unteren Abschnitt zu dem oberen Abschnitt hin vergrößerndes Querprofil, insbesondere ein Profil in Form des Buchstabens U oder des Buchstabens V, mit schrägen Flanken aufweist, um einen Bodenschutz vorzusehen, wenn das Fahrzeug seitlich geneigt ist.

32. Fahrzeug nach einem der Ansprüche 21 bis 31,
**dadurch gekennzeichnet, dass** der Kofferraum (8) Oberflächenquerabschnitte aufweist, die in axialer Richtung in einer Richtung von dem vorderen Abschnitt zur Aufnahme (14) der Beine des Fahrers zunehmen, um eine aerodynamische Stromlinienform zu bilden.

33. Fahrzeug nach einem der Ansprüche 21 bis 32,
**dadurch gekennzeichnet, dass** der vordere obere Abschnitt des Kofferraums (8) seitlich getiefte Fächer aufweist, um einen Bewegungsraum für die Lenkstange (5) und die Steuerungen freizumachen.

34. Fahrzeug nach einem der Ansprüche 21 bis 33,
**dadurch gekennzeichnet, dass** der obere Abschnitt des Kofferraums (8) Hohlkehlen in Kreisbogenform um die Achse der Gabel (4) aufweist, um die Bewegungsbahn der Lenkstange (5) und der Steuerungen freizumachen.

35. Fahrzeug nach einem der Ansprüche 21 bis 34,
**dadurch gekennzeichnet, dass** die Wand des Kofferraums (8) hohlförmig profilierte Rippen aufweist, um den Kofferraum zu versteifen.

36. Fahrzeug nach einem der Ansprüche 21 bis 35,
**dadurch gekennzeichnet, dass** das Fahrgestell (1) einen zwischen dem Vorderrad (3) und dem Hinterrad (6) abgesenkten, unteren Plattform-Abschnitt (11) umfasst, auf welchem der untere Abschnitt des Kofferraums (8) so befestigt ist, dass der Schwerpunkt abgesenkt ist.

## Claims

1. Luggage compartment (8) intended to equip a two-wheeled motor vehicle, to increase its load-carrying capacity, while making transport of the load on the vehicle safer, the compartment being formed from a container (8) suitable to be located between the front wheel (3) and the back wheel (6) of the vehicle and including means of attachment to the chassis (1) of the vehicle, the container enclosing a load volume that extends between the front wheel and the rear wheel, in such a way that the load volume (9) exhibits a centre of mass located in mid position and in a lowered position in relation to the two wheels (3-6), the compartment being equipped with an aperture for loading and a hood (9) for the aperture mounted in detachable fashion on the upper part (13) of the container (8),
**characterised in that** it (the compartment) exhibits a protruding form laterally, the load volume (8) being of the order of several hundred litres, the location and the size of the compartment's protuberances being dimensioned in such a way as to provide two lateral housings (14,14') for the rider's legs in order to constitute a protection in the event of side impact.

2. Luggage compartment according to claim 1, **characterised in that** its transversal dimensions are of the order of one half of a metre to one metre:

3. Luggage compartment according to claim 1 or 2, **characterised in that** it includes a saddle part (9,10,14) for the rider.

4. Luggage compartment according to one of the claims 1 to 3, **characterised in that** the hood for the aperture forms a support for the rider's saddle (10).

5. Luggage compartment according to one of the claims 1 to 4, **characterised in that** the hood (9) for the aperture and the loading aperture are disposed and oriented towards the rear of the upper part of the container (8).

6. Luggage compartment according to one of the claims 1 to 5, **characterised in that** the hood (9) for the aperture is articulated on an axis of rotation (13) mounted on the upper part of the compartment (8) in such a way as to permit the hood (9) to be opened by rotation towards the handlebars (5) of the vehicle.

7. Luggage compartment according to one of the claims 1 to 6, **characterised in that** the container (8) exhibits two protruding cheeks that are to all intents and purposes symmetrical with reference to an axial plane, the location and size of the protruding cheeks being chosen to permit the fitting of two lateral hollowed out recesses (14,14'), constituting housings to protect the rider's legs.

8. Luggage compartment according to one of the claims 1 to 7, **characterised in that** the protruding shape of the container (8) is arranged to form two housings (15,15') for the rider's feet.

9. Luggage compartment according to one of the claims 1 to 8, **characterised in that** the lower part of the container (8) includes a hollow-profiled axial groove to enclose the lower part of the vehicle chassis (1).

10. Luggage compartment according to one of the claims 1 to 9, **characterised in that** front part of the container (8) includes a recessed axial portion surrounded by two lateral portions projecting forwards to enclose the front part of the vehicle chassis (1).

11. Luggage compartment according to one of the claims 1 to 10, **characterised in that** the container (8) exhibits a transverse profile that increases in size from bottom to top, in particular a profile in the form of a letter U or letter V, with oblique sides, in order to maintain ground clearance when the vehicle is inclined sideways.

12. Luggage compartment according to one of the claims 1 to 11, **characterised in that** the container (8) exhibits cross sections of increasing area in the axial direction going from the front part (4) to the housing (14) for the rider's legs, in order to form an aerodynamic fairing.

13. Luggage compartment according to one of the claims 1 to 12, **characterised in that** the upper front part of the container (8) includes swept down side sections in such a way as to provide clearance for the movement of the handlebars (5) and the controls.

14. Luggage compartment according to one of the claims 1 to 13, **characterised in that** the container (8) contains grooves that develop in a circular arc around the axis of the handlebars to afford clearance for the trajectory of movement of the handlebars (5) and controls.

15. Luggage compartment according to one of the claims 1 to 14, **characterised in that** the walls of the container (8) present hollow-profiled ribs to stiffen the container.

16. Luggage compartment according to one of the claims 1 to 15, **characterised in that** the container (8) is made of a polymer material.

17. Luggage compartment according to one of the claims 1 to 16, **characterised in that** the container (8) is made of reinforced or stratified polymer resin.

18. Luggage compartment according to one of the claims 1 to 17, **characterised in that** the container (8) is made by the rotary moulding process.

19. Luggage compartment according to one of the claims 1 to 18, **characterised in that** it is modular and intended to be mounted in a retractable fashion on some device of the motorcycle, the lower and/or the front part of the container (8) including mounting elements suitable for interacting with a mounting system mounted on the lower and/or front part of the chassis (1).

20. Arrangement of a two-wheeled motor vehicle, **characterised in that** it is fitted with a luggage compartment (8) according to one of the claims 1 to 19).

21. Arrangement of a two-wheeled motor vehicle comprising:
- a chassis (1)
- a mechanism to steer the front wheel (3) including a fork (4) and handlebar (5)
- an articulated motor propulsion unit (7) on the chassis to drive the rear wheel (6) and
- a part constituting a support for the saddle (10) for a rider/driver,
the arrangement being equipped with a luggage compartment (8) intended to increase the load-carrying capacity while making transport of the load on the vehicle safer, the luggage compartment being formed from a container (8) mounted on the chassis (1) between the front wheel (3) and the back wheel (6) of the vehicle, the container enclosing a load volume that extends between the front wheel and the rear wheel, and presenting a centre of mass located in mid position and in a lowered position in relation to the space between the two wheels (3-6), the motor propulsion unit being disposed under the lower base of the compartment (8), the compartment including an aperture for loading and a hood (9) for the aperture, mounted in detachable fashion on the upper part (13) of the container (8),
**Characterised in that** the compartment (8) exhibits a form that protrudes laterally, the load volume (8) being of the order of several hundred litres, the location and size of the protuberances of the compartment (8) being dimensioned in such a way as to provide two lateral housings (14,14') for the rider's legs in order to provide protection in the event of side impact.

22. Arrangement according to claim 21, **characterised in that** the transverse dimensions of the compartment (8) are of the order of one half of a metre to one metre.

23. Arrangement according to claim 21 or 22, **characterised in that** at least a part of the compartment (9-10-14) forms at least a part of the saddle (10) for the rider.

24. Arrangement according to claims 21 to 23, **characterised in that** the hood (9) for the loading aperture forms the support for the saddle (10) for the rider.

25. Arrangement according to one of the claims 21 to 24, **characterised in that** the loading aperture and the hood (9) for the aperture of the compartment are arranged and oriented at the rear of the upper part of the container (8).

26. Arrangement according to one of the claims 21 to 25, **characterised in that** the hood (9) for the aperture is articulated on an axis of rotation (13) mounted on the upper part of the compartment (8) in such a way as to permit the hood (9) to be opened by rotation towards the handlebar (5) of the vehicle.

27. Arrangement according to one of the claims 21 to 26, **characterised in that** the compartment (8) includes two protruding cheeks, to all intents and purposes symmetrical with reference to an axial plane, the location and size of the protruding cheeks being arranged to provide two lateral recesses (14,14') that form protective housings for the rider's legs.

28. Arrangement according to one of the claims 21 to 27, **characterised in that** it includes two recesses (15,15') for the rider's feet, the protruding form of the compartment (8) being arranged to form the two housings 15,15', which constitute a protection for the rider's feet in the event of a side impact.

29. Arrangement according to one of the claims 21 to 28, **characterised in that** the lower part of the compartment (8) is hollowed out axially to enclose the lower part of the chassis (1) of the vehicle.

30. Arrangement according to one of the claims 21 to 29, **characterised in that** the front part of the compartment (8) comprises two side portions projected forwards in such a way as to envelop the front part of the chassis (1) and the mechanism (4) for steering the vehicle.

31. Arrangement according to one of the claims 21 to 30, **characterised in that** the compartment (8) exhibits a transverse profile that increases in size from bottom to top, in particular a profile in the form of a letter U or letter V, with oblique sides, in order to maintain ground clearance when the vehicle is inclined sideways.

32. Arrangement according to one of the claims 21 to 31, **characterised in that** the container (8) exhibits cross sections of increasing area following the axial direction in a sense going from the front part towards the housing (14,14') for the rider's legs, in order to form an aerodynamic fairing.

33. Arrangement according to one of the claims 21 to 32, **characterised in that** the upper front part of the compartment (8) includes lowered side sections to provide clearance for the movement of the handlebars and controls.

34. Arrangement according to one of the claims 21 to 33, **characterised in that** the upper part of the compartment (8) includes hollowed out grooves in the form of a circular arc around the axis of the fork (4) to provide clearance for the trajectory of movement of the handlebar and the controls.

35. Arrangement according to one of the claims 21 to 34, **characterised in that** the walls of the compartment (8) include hollow-profiled ribs to provide rigidity for the compartment.

36. Arrangement according to one of the claims 21 to 35, **characterised in that** the chassis includes a lower platform part (11) lowered between the front wheel (3) and the rear wheel (6) on which the lower part of the loading compartment (8) is attached in such a way as to lower the centre of gravity.
